# EUROPEAN PATENT SPECIFICATION

(11) **EP 3 541 051 B1**
(45) Date of publication and mention of the grant of the patent: **08.07.2020**
(21) Application number: 18765531.1
(22) Date of filing: 27.02.2018
(51) Int. Cl.: H04L 29/08, H04L 29/06, H04L 29/12, H04L 9/32, H04L 9/06

(54) **ACCELERATION METHOD FOR HANDSHAKE REQUEST IN CONTENT DELIVERY NETWORK, DEVICE AND EDGE NODE**
BESCHLEUNIGUNGSVERFAHREN FÜR HANDSHAKE-ANFRAGE, VORRICHTUNG UND KANTENKNOTEN IN EINEM INHALTSBEREITSTELLUNGSNETZWERK
PROCÉDÉ D'ACCÉLÉRATION POUR DEMANDE D'ÉTABLISSEMENT DE LIAISON DANS UN RÉSEAU DE DISTRIBUTION DE CONTENU, DISPOSITIF ET NOEUD DE PÉRIPHÉRIE

(30) Priority: 30.01.2018 CN 201810089242
(43) Date of publication of application: 18.09.2019
(73) Proprietor: Wangsu Science & Technology Co., Ltd., Shanghai 200030 (CN)
(72) Inventor: CHEN, Jiejun, Xuhui District Shanghai 200030§ (CN); DENG, Jianwei, Xuhui District Shanghai 200030§ (CN)
(74) Representative: Hanna Moore + Curley
(86) International application number: PCT/CN2018/077430
(87) International publication number: WO 2019/148562

(56) References cited:
- CN-A- 106 027 646
- CN-A- 106 161 449
- CN-A- 106 341 417
- CN-A- 106 341 417
- CN-A- 106 789 026
- US-A1- 2013 156 189
- US-B1- 7 502 884

## Description

### FIELD OF THE DISCLOSURE

The present disclosure relates to the technical field of Internet and, more particularly, relates to an acceleration method for handshake request, a device, and an edge node in a content delivery network.

### BACKGROUND

Currently, the Hyper Text Transfer Protocol (HTTP) is applied to deliver messages between a Web browser and web servers. The HTTP protocol transmits content in a manner of plaintext, and often does not provide data encryption in any manner. If an attacker intercepts a packet transmitted between the Web browser and a web server, information carried by the packet may be identified directly. Thus, HTTP is inappropriate for transmitting private messages.

To solve the aforementioned deficiencies in the HTTP protocol, Hyper Text Transfer Protocol over Secure Socket Layer (HTTPS) is developed. To ensure safety of data transmission, the HTTPS introduces the Secure Socket Layer (SSL) protocol or the Transport Layer Security (TLS) protocol based on HTTP. The SSL/TLS relies on credentials to authorize servers, and may encrypt communication between a browser and a server.

However, while ensuring the safety of data transmission, HTTPS brings in a relatively high cost for a server. Specifically, the HTTPS-based communication needs to undergo a complicated handshake process, and the handshake process further includes an asymmetric decryption process that consumes a large amount of time and resources. In a conventional content delivery network, the aforementioned complicated handshake process is often implemented at an edge node. Thus, if the edge node needs to handle handshake requests from several clients at the same time, the load of the server in the edge node may be relatively high. Accordingly, the processing speed of the handshake requests may be slowed down, which may even lead to the risk of crash. Therefore, when processing HTTPS handshake requests, the edge node in the conventional content delivery network often has a relatively low efficiency.
The document US 2013/0156189 A1 discloses an Internet infrastructure delivery platform that provides an RSA proxy "service" as an enhancement to the SSL protocol that off-loads the decryption of the encrypted pre-master secret (ePMS) to an external server.
The Document CN 106341417 A discloses a content delivery network-based HTTPS acceleration method and system. An SSL acceleration card board scheme is adopted to solve the problem of heavy burden of performance of business processing capability of software-based SSL implementation.

### BRIEF SUMMARY OF THE DISCLOSURE

Objective of the present disclosure is to provide an acceleration method for handshake request, a device, and an edge node in a content delivery network, according to the appended set of claims which may improve the processing efficiency of HTTPS handshake requests.

As such, according to technical solutions provided by the present disclosure, other than a service server, an edge node may further include an acceleration server. The service server may store credentials for various domain names, and the acceleration server may store private keys for the various domain names. The service server may interact with a client of a user. After receiving a handshake request sent by a client towards a target domain name, the service server may feedback a credential to which the target domain name corresponds to the client. The credential may include a public key corresponding to the target domain name. Thus, the client may extract the public key from the received credential, and utilize the public key to encrypt the session key of the current session. Further, the client may provide the encrypted session key to the service server. Because the subsequent decryption process needs to consume a relatively large amount of resources, the service server may send a decryption request that carries the aforementioned encrypted session key to the acceleration server. When decrypting the encrypted session key, the acceleration server may first acquire a private key corresponding to the target domain name, and utilize the private key to perform decryption. The decrypted session key may be fed back by the acceleration server to the service server. The service server may store the decrypted session key, thereby completing a current handshake process. The session key may thus be utilized to encrypt the data subsequently transmitted between the service server and the client. Further, an SSL/TLS acceleration card may be installed in the acceleration server, and the aforementioned decryption process may be accelerated through the acceleration card, thereby reducing the time needed by decryption. Further, after the service server handles the decryption process in the handshake process to the acceleration server, the service server may continue to process the subsequent algorithm suite negotiation process. Thus, after the decryption request in the handshake process is separated, the decryption process and the algorithm suite negotiation process may be performed simultaneously, which further reduces the time needed by the handshake process. Thus, the disclosed technical solutions may improve the processing efficiency of the HTTPS handshake request, thereby reducing the waiting time of the user.

### BRIEF DESCRIPTION OF THE DRAWINGS

To more clearly illustrate technical solutions of the present disclosure, accompanying drawings used in descriptions of embodiments are briefly introduced hereinbelow. Obviously, the drawings in the following descriptions are merely some embodiments of the present disclosure, and for those ordinarily skilled in the relevant art, other drawings may be obtained from these accompanying drawings without creative labor.
FIG. 1 illustrates a structural schematic view of an edge node according to embodiments of the present disclosure;
FIG. 2 illustrates a flow chart of an acceleration method for handshake request at a service server side according to embodiments of the present disclosure;
FIG. 3 illustrates a schematic view showing interaction between a client, a service server, and an acceleration server according to embodiments of the present disclosure;
FIG. 4 illustrates a schematic view of a service server according to embodiments of the present disclosure;
FIG. 5 illustrates a flow chart of an acceleration method for handshake request at an acceleration server side according to embodiments of the present disclosure;
FIG. 6 illustrates a schematic view of an acceleration server according to embodiments of the present disclosure; and
FIG. 7 illustrates a structural schematic view of a computer terminal according to embodiments of the present disclosure.

### DETAILED DESCRIPTION

To make the objective, technical solutions and advantages of the present disclosure clearer, embodiments of the present disclosure are described in more details with reference to the accompanying drawings.

### Embodiment 1

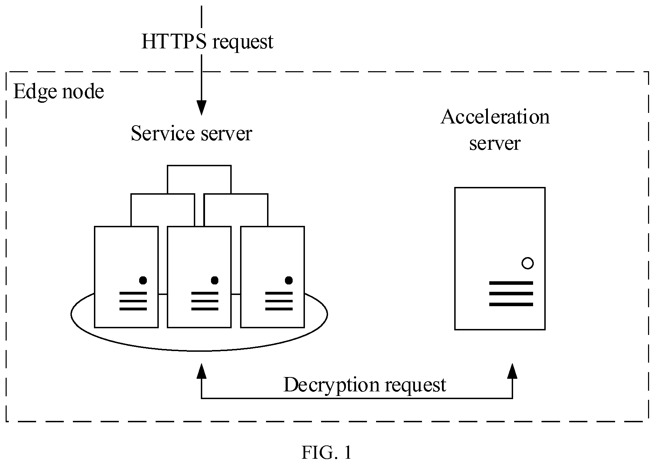

The present disclosure provides an acceleration method for handshake request in a content delivery network, and the method may be applied to a service server in an edge node. In one embodiment, the edge node may include a service server and an acceleration server. The service server may be a server to interact with a client of a user, and the acceleration server may be configured to process a decryption process of a HTTPS handshake process. Referring to FIG. 1, an edge node may include a plurality of service servers, and the plurality of service servers may, based on a load-balancing strategy, selectively receive requests sent by client(s) of the user. The edge node may include an acceleration server, and the acceleration server may be coupled to a plurality of service servers in the edge node, thereby processing decryption requests sent by the plurality of service servers.

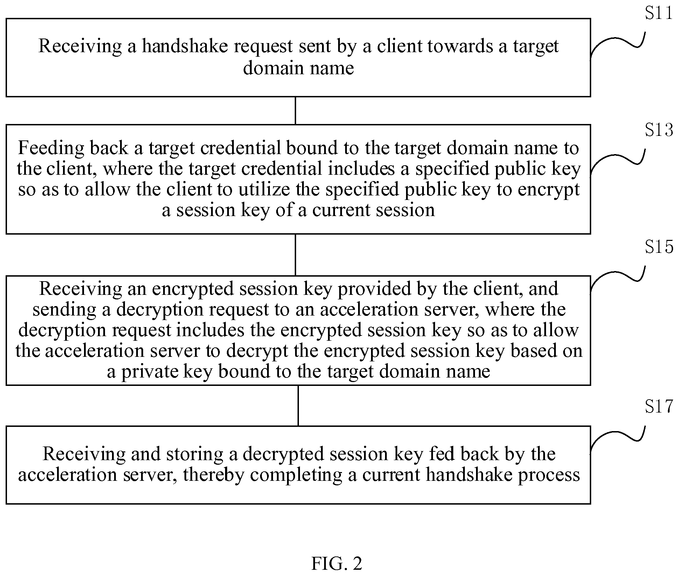

In one embodiment, a service server may store credentials bound to corresponding domain names. A credential may indicate a domain name accessed by a user/website being a legal domain name/website. The credential bound to the domain name may include a public key, and the public key may be configured to encrypt data. Referring to FIG. 2, an acceleration method for handshake request that is applicable to a service server may include following steps:
S11: receiving a handshake request sent by a client towards a target domain name.

In one embodiment, the client may be a terminal device used by a user. The client may establish a connection with a source server through a content delivery network, and requests sent by the client may be received by a nearby edge node. The user may input a target domain name of a target website at the client, thereby accessing the target website through the client. When accessing the target website, the client needs to complete a handshake process with the nearby edge node. Specifically, the client may send a handshake request pointing to the target domain name, and the handshake request may carry the target domain name. After being sent, the handshake request may be received by the nearby edge node. In practical application scenarios, because the edge node includes a plurality of service servers, to fully utilize computing resources of each service server, a load-balancing strategy may be adopted to determine the specific service server to receive the handshake request sent by the client. Specifically, loading parameters of each service server in the edge node may be acquired, respectively. The loading parameters may include CPU utilization rate, memory utilization rate, and connections, etc. Further, based on the acquired loading parameters, the load of each service server may be determined. The higher the load, the lower the performance of the service server in processing handshake requests. As such, based on the load of each service server, the service server with the minimum load may be determined as a target service server. Further, the target service server may receive handshake requests sent by the client towards the target domain name.

S13: feeding back a target credential bound to the target domain name to the client, where the target credential includes a specified public key so as to allow the client to utilize the specified public key to encrypt a session key of a current session.

In one embodiment, a service server that receives handshake requests may store credentials bound to each domain name. The credentials in the service server may be associated and stored with corresponding domain names. Specifically, a domain name may be a key, and a credential bound to the domain name may be a value, such that a pair of key-value is formed for storage. After receiving a handshake request towards the target domain name, the service server may, based on the target domain name, query to obtain a target credential associated and stored with the target domain name. Thus, the service server may feed back the target credential to the client that sends the handshake request.

In one embodiment, after receiving the target credential sent by the service server, the client may extract a specified public key from the target credential. Further, when sending the handshake request towards the target domain name, the client may generate a session key of a session between the client and the service server. After being generated, the session key may be stored locally at the client. The session key may encrypt data transmitted between the client and the service server, thereby ensuring safety of data transmission. To enable the service server to decrypt the encrypted communication data, the client needs to provide the generated session key to the service server. However, if the session key is provided to the service server directly in the form of plaintext, there is a chance that the session key is intercepted. Therefore, the client may use the specified public key extracted from the target credential to encrypt the session key, and send the encrypted session key to the service server, thereby ensuring the safety of the session key.

S15: receiving an encrypted session key provided by the client, and sending a decryption request to an acceleration server, where the decryption request includes the encrypted session key so as to allow the acceleration server to decrypt the encrypted session key based on a private key bound to the target domain name.

In one embodiment, after receiving the encrypted session key sent by the client, the service server needs to decrypt the encrypted session key. However, during the decryption process of the encrypted session key, a relatively large amount of resources needs to be consumed. Further, during the process of decrypting the encrypted session key, a private key paired up with the specified public key is needed to complete decryption. According to the present disclosure, the service server stores credentials that include public keys, but does not store corresponding private keys. The private keys that match the public keys are stored in the acceleration server. Thus, the decryption process is implemented by the acceleration server.

In one embodiment, the service server may generate a decryption request that includes the encrypted session key, and send the decryption request to the acceleration server. The encryption request may further include an identity of the target domain name. After receiving the encryption request, the acceleration server may extract the encrypted session key, and identify towards which domain name the encrypted session key is directed. The acceleration server may store private keys bound to domain names. That is, a public key-private key pair bound to the same domain name may be stored in the service server and the acceleration server, respectively, after being separated.

In one embodiment, a private key in the acceleration server may be stored under a specified path, and the specified path may be associated with a domain name corresponding to the private key. Thus, after identifying the target domain name from the decryption request, the acceleration server may determine a target specified path that the target domain name points to. Under the target specified path, the private key that matches the specified public key is stored. Thus, by reading the private key stored under the target specified path, the acceleration server may acquire the private key bound to the target domain name.

In one embodiment, after acquiring the private key bound to the target domain name, the acceleration server may utilize the private key to decrypt the session key encrypted by the specified public key, thereby obtaining the decrypted session key.

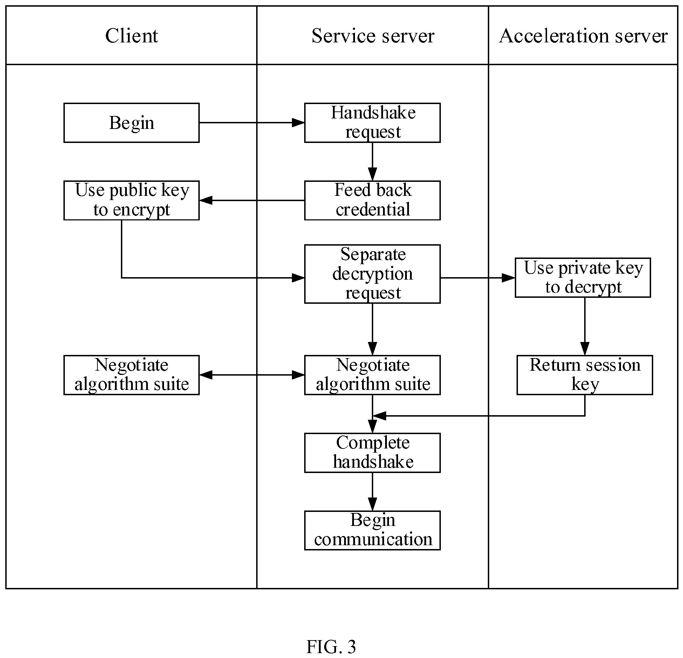

As such, when processing the handshake request, the service server may extract and hand over the decryption process of the handshake request to the acceleration server for processing. Referring to FIG. 3, in one embodiment, after extracting the decryption process and sending the decryption request to the acceleration server, the service server does not terminate the processing of the current handshake process. Instead, the service server may continue to complete algorithm suite negotiation during the handshake process with the client. Specifically, during the process of negotiating the algorithm suite, the client may report the TLS version, cipher suites, compression methods, etc. to the service server. After receiving information reported by the client, the service server may feed back a selected TLS version and cipher suits to the client taking into consideration the encryption infrastructure supported by both itself and the client. That is, when sending the decryption request to the acceleration server, the service server may also determine an algorithm suite used in the current session with the client. Thus, the negotiation process of the algorithm suite and the decryption process may be performed at the service server and the acceleration server simultaneously, which reduces the time needed by the entire handshake process.

In one embodiment, after sending the handshake request towards the target domain name, the client may continue to send other access request towards the target domain name within a certain period of time. To avoid a repeated handshake process for each request, persistent connection may be maintained between the client and the service server, and between the service server and the acceleration server. The persistent connection between the service server and the acceleration server may be optimized through HTTP2.0, to avoid a large number of repeated handshake processes. Specifically, the service server may receive a handshake request sent by the client through a first process. Further, the service server may perform data interaction with the acceleration server through a second process. In one embodiment, a mapping relationship may be established between the first process and the second process, and the mapping relationship may be expressed using a Hash table. As such, if the client sends an access request towards the target domain name after sending the aforementioned handshake request within a specified period of time, such access request may still be received by the service server through the first process. Further, based on the mapping relationship between the first process and the second process, when subsequently processing the access request, the access request may still be processed between the service server and the acceleration server through a second process. Thus, through the mapping relationships between different processes, the persistent connection may be realized logically, and when the user sends a second or more HTTPS requests towards the edge node within a short period of time, the process used by the first HTTPS request may still be used between the client and the service server, and between the service server and the acceleration server. Accordingly, repeated handshake processes are avoided, and the processing efficiency of the request is improved.

S17: receiving and storing a decrypted session key fed back by the acceleration server, thereby completing a current handshake process.

In one embodiment, after the acceleration server decrypts the session key, the acceleration server may send the decrypted session key to the service server. The service server may store the session key locally, thereby completing the current handshake process. As such, the session key of the current session is stored both at the client and the service server. When communication data is subsequently transmitted between the client and the service server, the session key may be utilized to encrypt and decrypt the communication data transmitted therebetween.

### Embodiment 2

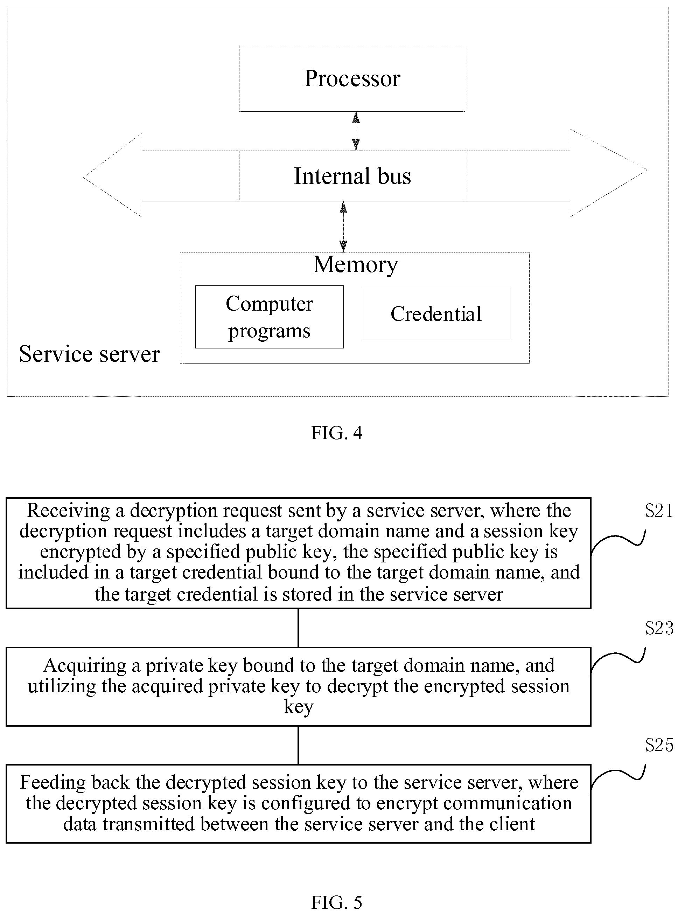

Referring to FIG. 4, the present disclosure further provides a service server, and the service server is disposed in an edge node of a content delivery network. The service server includes a memory and a processor, and the memory stores computer programs and a plurality of credentials bound to domain names. When being executed by the processor, the computer programs implement following steps:
S11: receiving a handshake request sent by a client towards a target domain name;
S13: feeding back a target credential bound to the target domain name to the client, where the target credential includes a specified public key so as to allow the client to utilize the specified public key to encrypt a session key of a current session;
S15: receiving an encrypted session key provided by the client, and sending a decryption request to an acceleration server, where the decryption request includes the encrypted session key so as to allow the acceleration server to decrypt the encrypted session key based on a private key bound to the target domain name;
S17: receiving and storing a decrypted session key fed back by the acceleration server, to complete a current handshake process.

In one embodiment, the memory may include a physical device for storing information. The information is often digitalized and stored by a medium realized using an electrical, magnetic or optical manner. The disclosed memory may further include: a device that stores information using a manner of electric energy, such as a random-access memory (RAM) and a ready-only memory (ROM); a device that stores information using a manner of magnetic energy, such as a hard disc, a floppy disc, a magnetic tape, a magnetic core memory, a magnetic bubble memory, and a U disc; a device that stores information using an optical manner, such as a CD or a DVD. Obviously, there are other types of memories, such as quantum memory, and graphene memory.

In one embodiment, the processor may be implemented using any appropriate manner. For example, the processor may be a micro-processor, a processor, or a computer-readable medium that stores computer-readable program code (e.g., software or firmware) executable by the (micro)processor, logic gates, switches, an application specific integrated circuit (ASIC), a programmable logic controller, or an embedded micro-controller.

In the service server provided by embodiments of the present disclosure, the specific function of the processor and the memory may correspond to descriptions in aforementioned implementations of this specification.

### Embodiment 3

The present disclosure further provides an acceleration method for handshake request in a content delivery network. The method may be applied to an acceleration server in an edge node, and the acceleration server may be coupled to a plurality of service servers. The acceleration server may store a plurality of private keys bound to domain names, and public keys to which the plurality of private keys correspond may be included in credentials of the service servers. Referring to FIG. 5, the method may include following steps:

S21: receiving a decryption request sent by a service server, where the decryption request includes a target domain name and a session key encrypted by a specified public key, the specified public key is included in a target credential bound to the target domain name, and the target credential is stored in the service server.

In one embodiment, after receiving the encrypted session key sent by the client, the service server may need to decrypt the encrypted session key. However, during the decryption process of the encrypted session key, a relatively large amount of resources needs to be consumed. Further, during the process of decrypting the encrypted session key, a private key paired up with the specified public key is needed to complete decryption. According to the present disclosure, the service server stores credentials that include public keys, but does not store corresponding private keys. The private keys that match the public keys are stored in the acceleration server. Thus, the decryption process is implemented by the acceleration server.

In one embodiment, the acceleration server may receive the decryption request through a pre-defined listening port. Specifically, the listening port at the acceleration server may be associated with a domain name, and different listening ports may receive decryption requests towards different domain names. The association between the listening ports and the domain names may be defined in the communication protocol between the acceleration server and the service server. Thus, when the service server sends the decryption request towards the target domain name, the service server may identify the target listening port to receive the decryption request by identifying the target domain name in the decryption request. Accordingly, the acceleration server may receive the decryption request through the target listening port associated with the target domain name.

Obviously, in practical applications, the acceleration server may only include one listening port, and the one listening port may be configured to receive decryption requests towards different domain names. After receiving a decryption request, a corresponding private key may be acquired based on the domain name included in the decryption request.

In one embodiment, to improve the efficiency of the server in processing decryption requests, an acceleration component of a specified protocol may be installed at the acceleration server. The acceleration component may be, for example, an SSL acceleration card or a TLS acceleration card. When the acceleration server processes the decryption request, the acceleration card may be applied for optimization, thereby improving the processing efficiency of the decryption request. In practical applications, the acceleration component may be bound to a specified process in the acceleration server. For example, the acceleration server may include 8 processes. The 8 processes may be bound to the acceleration component, and when the decryption request needs to be processed, the 8 processes may be applied to process the decryption request.

In one embodiment, the service server may generate a decryption request that includes the encrypted session key, and send the decryption request to the acceleration server. The encryption request may further include the target domain name. After receiving the encryption request, the acceleration server may extract the encrypted session key, and identify towards which domain name the encrypted session key is directed. The acceleration server may store private keys bound to domain names. That is, a public key-private key pair that is bound to the same domain name may be stored in the service server and the acceleration server, respectively, after being separated.

S23: acquiring a private key bound to the target domain name, and utilizing the acquired private key to decrypt the encrypted session key.

In one embodiment, a private key in the acceleration server may be stored under a specified path, and the specified path may be associated with a domain name corresponding to the private key. Thus, after identifying the target domain name from the decryption request, the acceleration server may determine a target specified path that the target domain name points to. Under the target specified path, the private key that matches the specified public key is stored. Thus, by reading the private key stored under the target specified path, the acceleration server may acquire the private key bound to the target domain name.

In one embodiment, to further ensure the safety of the data, the private keys stored in the acceleration server may be encrypted. For example, the private keys stored in the acceleration server may be encrypted through the MD5 code. As such, after acquiring the encrypted private key that is bound to the target domain name, the acceleration server may decrypt the encrypted private key using the corresponding MD5 code to obtain the decrypted private key.

In one embodiment, after acquiring the private key bound to the target domain name, the acceleration server may utilize the private key to decrypt the session key encrypted by the specified public key, thereby obtaining the decrypted session key.

S25: feeding back the decrypted session key to the service server, where the decrypted session key is configured to encrypt communication data transmitted between the service server and the client.

In one embodiment, after the acceleration server decrypts the session key, the acceleration server may send the decrypted session key to the service server. The service server may store the session key locally, thereby completing the current handshake process. As such, the session key of the current session is stored both at the client and the service server. When communication data is subsequently transmitted between the client and the service server, the session key may be utilized to encrypt and decrypt the communication data transmitted therebetween.

In one embodiment, the acceleration server may further be equipped with an anti-disaster system. Specifically, the edge node may include a master node and a slave node. The disclosed edge node may be the master node, and data synchronization may be maintained between the master node and the slave node. Further, when the acceleration server works, the current performance indexes of the acceleration server may be detected. The performance indexes may be key indexes such as, the CPU utilization rate, the memory utilization rate, the TCP connections, and the I/O bus data. When a performance index exceeds an allowed range, it is indicated that the load of the acceleration server is too high or there is malfunction. Under this situation, to ensure that the HTTPS request can be processed normally, the service in the edge node may be switched to the slave node, such that processing of the HTTPS request can be continued in the slave node. Further, a notification message configured to characterize node switching may be sent out, thus reminding the staff members to detect and maintain the master node.

### Embodiment 4

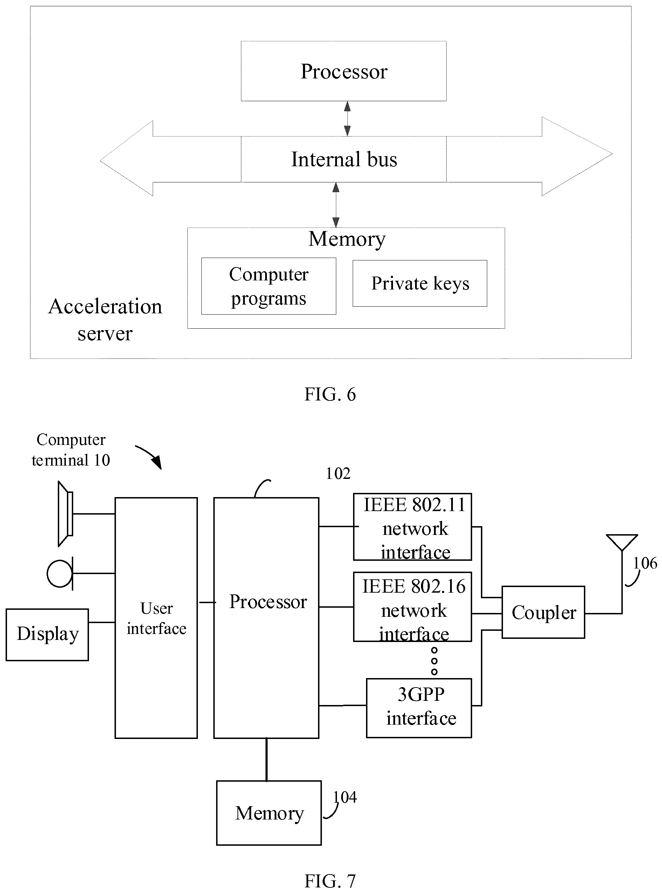

Referring to FIG. 6, the present disclosure further provides an acceleration server, and the acceleration server is disposed in an edge node of a content delivery network. The acceleration server includes a memory and a processor, and the memory stores computer programs and a plurality of private keys bound to domain names. When being executed by the processor, the computer programs implement following steps:
S21: receiving a decryption request sent by a service server, where the decryption request includes a target domain name and a session key encrypted by a specified public key, the specified public key is included in a target credential bound to the target domain name, and the target credential is stored in the service server;
S23: acquiring a private key bound to the target domain name, and utilizing the acquired private key to decrypt the encrypted session key;
S25: feeding back the decrypted session key to the service server, where the decrypted session key is used to encrypt communication data transmitted between the service server and a client.

In one embodiment, the memory may include a physical device for storing information. The information is often digitalized and stored by a medium realized using an electrical, magnetic or optical manner. The disclosed memory may further include: a device that stores information using a manner of electric energy, such as a random-access memory (RAM) and a ready-only memory (ROM); a device that stores information using a manner of magnetic energy, such as a hard disc, a floppy disc, a magnetic tape, a magnetic core memory, a magnetic bubble memory, and a U disc; a device that stores information using an optical manner, such as a CD or a DVD. Obviously, there are other types of memories, such as quantum memory, and graphene memory.

In one embodiment, the processor may be implemented using any appropriate manner. For example, the processor may be a micro-processor, a processor, or a computer-readable medium that stores computer-readable program code (e.g., software or firmware) executable by the (micro)processor, logic gates, switches, an application specific integrated circuit (ASIC), a programmable logic controller, or an embedded micro-controller.

In the service server provided by embodiments of the present disclosure, the specific functions of the processor and the memory may correspond to descriptions in aforementioned implementations of this specification.

### Embodiment 5

Referring to FIG. 1, the present disclosure further provides an edge node in a content delivery network, and the edge node includes service servers and an acceleration server. A service server stores a plurality of credentials that are bound to domain names, and the acceleration server stores a plurality of private keys that are bound to the domain names.

The service server is configured to: receive a handshake request sent by a client towards a target domain name, and feed back a target credential bound to the target domain name to the client, where the target credential includes a specified public key to allow the client to utilize the specified public key to encrypt a session key of a current session; receive an encrypted session key provided by the client and send a decryption request to the acceleration server, where the decryption request includes the encrypted session key; receive and store the decrypted session key fed back by the acceleration server, to complete the current handshake process.

The acceleration server is configured to receive the decryption request sent by the service server, to acquire a private key bound to the target domain name, and to utilize the acquired private key to decrypt the encrypted session key; and to feed back the decrypted session key to the service server.

Referring to FIG. 7, in the present disclosure, the aforementioned technical solutions may be applied to a computer terminal 10 shown in FIG. 7. The computer terminal 10 may include one or more (only one is shown in FIG. 7) processors 102 (a processor 102 may include but is not limited to a micro-controller unit (MCU) or a field-programmable gate array (FPGA)), a memory 104 configured to store data, and a transmission module 106 configured to perform a communication function. Those ordinarily skilled in the relevant art shall understand that, the structure in FIG. 7 is for illustrative purposes and is not intended to limit the structure of the aforementioned electronic device. For example, the computer terminal 10 may further include more components or less components than that shown in FIG. 7, or have a different configuration other than what is shown in FIG. 7.

The memory 104 may be configured to store software programs and modules of an application software. The processor 102 may run software programs and modules stored in the memory 104 to execute various functional applications or perform data processing. The memory 104 may include a high-speed random access memory, or may include a non-volatile memory, such as one or more magnetic storage devices, flash memories, or other non-volatile solid-state memories. In some embodiments, the memory 104 may further include memories configured remotely with respect to the processor 102, and these remote memories may be connected to the computer terminal 10 through a network connection. Examples of the aforementioned network include but are not limited to Internet, Intranet, local area network, mobile communication network, and any combinations thereof.

The transmission device 106 is configured to receive or transmit data through a network. Specific examples of the aforementioned network include wireless networks provided by communication providers of the computer terminal 10. In one example, the transmission device 106 may include a network interface controller (NIC), and the NIC may be connected to other network devices through a base station to perform communication with the Internet. In one example, the transmission device 106 may be a radio frequency (RF) module, and the RF module may be configured to communicate with the Internet through a wireless mode.

As such, according to technical solutions provided by the present disclosure, other than a service server, an edge node may further include an acceleration server. The service server may store credentials for various domain names, and the acceleration server may store private keys for the various domain names. The service server may interact with a client of a user. After receiving a handshake request sent by a client towards a target domain name, the service server may feedback a credential to which the target domain name corresponds to the client. The credential may include a public key corresponding to the target domain name. Thus, the client may extract the public key from the received credential, and utilize the public key to encrypt the session key of the current session. Further, the client may provide the encrypted session key to the service server. Because the subsequent decryption process needs to consume a relatively large amount of resources, the service server may send a decryption request that carries the aforementioned encrypted session key to the acceleration server. When decrypting the encrypted session key, the acceleration server may first acquire a private key corresponding to the target domain name, and utilize the private key to perform decryption. The decrypted session key may be fed back by the acceleration server to the service server. The service server may store the decrypted session key, thereby completing a current handshake process. The session key may thus be utilized to encrypt the data subsequently transmitted between the service server and the client. Further, an SSL/TLS acceleration card may be installed in the acceleration server, and the aforementioned decryption process may be accelerated through the acceleration card, thereby reducing the time needed by decryption. Further, after the service server handles the decryption process in the handshake process to the acceleration server, the service server may continue to process the subsequent algorithm suite negotiation process. Thus, after the decryption request in the handshake process is separated, the decryption process and the algorithm suite negotiation process may be performed simultaneously, which further reduces the time needed by the handshake process. Thus, the disclosed technical solutions may improve the processing efficiency of the HTTPS handshake request, thereby reducing the waiting time of the user.

Through descriptions of the aforementioned embodiments, those skilled in the relevant art shall understand clearly that each embodiment may be implemented through software in combination of an essential universal hardware platform, or through a hardware. Based on such understanding, the aforementioned technical solutions in nature or the portion making contribution to the existing technologies may be embodied through the manner of software products. The computer software products may be stored in a computer-readable storage medium, such as ROM/RAM, magnetic disc, and optical disc, and the product may include a plurality of commands to enable a computing device (e.g., a personal computer, a server, or a network device) to execute each embodiment or the methods described in certain portions of the embodiments.

Foregoing is merely preferred embodiments of the present disclosure, and is not intended to limit the present disclosure.

## Claims

1. An acceleration method for handshake request in a content delivery network, applicable to a service server in an edge node, the service server storing a plurality of credentials bound to domain names, the method comprising:
receiving (S11) a handshake request sent by a client towards a target domain name;
feeding back (S13) a target credential bound to the target domain name to the client, wherein the target credential includes a specified public key so as to allow the client to utilize the specified public key to encrypt a session key of a current session;
receiving (S15) an encrypted session key provided by the client, and sending a decryption request to an acceleration server, wherein the decryption request includes the target domain name and the encrypted session key so as to allow the acceleration server to decrypt the encrypted session key based on a private key bound to the target domain name; and
receiving and storing (S17) a decrypted session key fed back by the acceleration server, thereby completing a current handshake process.

2. The method according to claim 1, wherein a number of service servers in the edge node is at least two, and correspondingly, the receiving a handshake request sent by a client towards a target domain name comprises:
acquiring loading parameters of each service server from the edge node, and based on the acquired loading parameters, determining a service server with a minimum load from the at least two service servers as a target service server; and
through the target service server, receiving the handshake request sent by the client towards the target domain name.

3. The method according to claim 1, wherein when sending the decryption request to the acceleration server, the method further comprises:
determining an algorithm suite used in the current session with the client.

4. The method according to claim 1, wherein after receiving the handshake request sent by the client towards the target domain name, the service server maintains a persistent connection with the client through a first process, and the service server maintains a persistent connection with the acceleration server through a second process, and correspondingly, the method further comprises:
establishing a mapping relationship between the first process and the second process, such that when the client once again sends an access request towards the target domain name within a specified period of time, the access request is received by the service server through the first process, and the access request is processed between the service server and the acceleration server through the second process.

5. A service server, the service server being disposed in an edge node of a content delivery network, the service server includes a memory and a processor, the memory storing computer programs and a plurality of credentials bound to domain names, and when being executed by the processor, the computer programs implement following steps:
receiving (S11) a handshake request sent by a client towards a target domain name;
feeding back (S13) a target credential bound to the target domain name to the client, wherein the target credential includes a specified public key so as to allow the client to utilize the specified public key to encrypt a session key of a current session;
receiving (S15) an encrypted session key provided by the client, and sending a decryption request to an acceleration server, wherein the decryption request includes the target domain name and the encrypted session key so as to allow the acceleration server to decrypt the encrypted session key based on a private key bound to the target domain name;
receiving and storing (S17) a decrypted session key fed back by the acceleration server, thereby completing a current handshake process.

6. An acceleration method for handshake request in a content delivery network, the method being applicable to an acceleration server in an edge node, the acceleration server storing a plurality of private keys bound to domain names and installed with acceleration components of a specified protocol, and the acceleration components are bound to specified processes in the acceleration server, the method comprising:
receiving (S21) a decryption request sent by a service server, wherein the decryption request includes a target domain name and a session key encrypted by a specified public key, the specified public key is included in a target credential bound to the target domain name, and the target credential is stored in the service server;
acquiring (S23) a private key bound to the target domain name, and utilizing the acquired private key to decrypt an encrypted session key through the specified processes and
feeding back (S25) a decrypted session key to the service server, wherein the decrypted session key is configured to encrypt communication data transmitted between the service server and a client.

7. The method according to claim 6, wherein private keys in the acceleration server is stored under a specified path, and correspondingly, the acquiring a private key bound to the target domain name comprises:
determining a target specified path towards which the target domain name directs, and reading a private key stored under the target specified path.

8. The method according to claim 6, wherein the acceleration server is configured with a listening port associated with a domain name, and correspondingly, the receiving the decryption request sent by the service server comprises:
identifying a target domain name in the decryption request sent by the service server, and receiving the decryption request through a target listening port associated with the target domain name.

9. The method according to claim 6, wherein the edge node includes a slave node, and correspondingly, the method further comprises:
detecting current performance indexes of the acceleration server, and when a performance index exceeds an allowed range, switching service in the edge node to the slave node and sending out a notification message that is configured to indicate node switching.

10. An acceleration server, the acceleration server being disposed in an edge node of a content delivery network, the acceleration server including a memory and a processor and installed with acceleration components of a specified protocol bound to specified processes, the memory storing computer programs and a plurality of private keys bound to domain names, and when being executed by the processor, the computer programs implement following steps:
receiving (S21) a decryption request sent by a service server, wherein the decryption request includes a target domain name and a session key encrypted by a specified public key, the specified public key is included in a target credential bound to the target domain name, and the target credential is stored in the service server;
acquiring (S23) a private key bound to the target domain name, and utilizing an acquired private key to decrypt an encrypted session key through the specified processes and
feeding back (S25) a decrypted session key to the service server, wherein the decrypted session key is configured to encrypt communication data transmitted between the service server and a client.

11. An edge node in a content delivery network, the edge node comprising a service server and an acceleration server, wherein:
the service server is configured to execute an acceleration method according to any one of claims 1 to 4; and
the acceleration server is configured to execute an acceleration method according to any one of claims 6 to 9.

## Patentansprüche

1. Beschleunigungsverfahren für eine Handshake-Anforderung in einem Inhaltsübermittlungsnetzwerk, das auf einen Dienstserver in einem Randknoten anwendbar ist, wobei der Dienstserver mehrere an Domänennamen gebundene Berechtigungsnachweise speichert, wobei das Verfahren Folgendes umfasst:
Empfangen (S11) einer Handshake-Anforderung, die von einem Client an einen Zieldomänennamen gesendet wurde;
Rückkoppeln (S13) eines an den Zieldomänennamen gebundenen Zielberechtigungsnachweises an den Client, wobei der Zielberechtigungsnachweis einen bestimmten öffentlichen Schlüssel beinhaltet, um so dem Client zu ermöglichen, den bestimmten öffentlichen Schlüssel zu verwenden, um einen Sitzungsschlüssel einer aktuellen Sitzung zu verschlüsseln;
Empfangen (S15) eines von dem Client bereitgestellten verschlüsselten Sitzungsschlüssels, und Senden einer Entschlüsselungsanforderung an einen Beschleunigungsserver, wobei die Entschlüsselungsanforderung den Zieldomänennamen und den verschlüsselten Sitzungsschlüssel beinhaltet, um so dem Beschleunigungsserver zu ermöglichen, um den verschlüsselten Sitzungsschlüssel basierend auf einem an den Zieldomänennamen gebundenen privaten Schlüssel zu entschlüsseln; und
Empfangen und Speichern (S17) eines von dem Beschleunigungsserver rückgekoppelten entschlüsselten Sitzungsschlüssels, wobei dadurch ein aktueller Handshake-Vorgang abgeschlossen wird.

2. Verfahren nach Anspruch 1, wobei eine Anzahl von Dienstservern in dem Randknoten wenigstens zwei beträgt, und dementsprechend, das Empfangen einer Handshake-Anforderung, die von einem Client an einen Zieldomänennamen gesendet wird, Folgendes umfasst:
Erwerben von Ladeparametern jedes Dienstservers von dem Randknoten, und basierend auf den erworbenen Ladeparametern, Bestimmen eines Dienstservers mit einer Mindestlast von den wenigstens zwei Dienstservern als Zieldienstserver; und
durch den Zieldienstserver, Empfangen der dem Client an den Zieldomänennamen gesendeten Handshake-Anforderung.

3. Verfahren nach Anspruch 1, wobei, wenn die Entschlüsselungsanforderung an den Beschleunigungsserver gesendet wird, das Verfahren ferner Folgendes umfasst:
Bestimmen einer Algorithmussuite, die in der aktuellen Sitzung mit dem Client verwendet wird.

4. Verfahren nach Anspruch 1, wobei nach dem Empfangen der von dem Client an den Zieldomänennamen gesendeten Handshake-Anforderung der Dienstserver eine dauerhafte Verbindung mit dem Client durch einen ersten Vorgang aufrechterhält, und der Dienstserver eine dauerhafte Verbindung mit dem Beschleunigungsserver durch einen zweiten Vorgang aufrechterhält, und dementsprechend, das Verfahren ferner Folgendes umfasst:
Herstellen einer Zuordnungsbeziehung zwischen dem ersten Vorgang und dem zweiten Vorgang derart, dass, wenn der Client innerhalb eines bestimmten Zeitraums erneut eine Zugriffsanforderung an den Zieldomänennamen sendet, die Zugriffsanforderung von dem Dienstserver durch den ersten Vorgang empfangen wird, und die Zugriffsanforderung zwischen dem Dienstserver und dem Beschleunigungsserver durch den zweiten Vorgang verarbeitet wird.

5. Dienstserver, wobei der Dienstserver in einem Randknoten eines Inhaltsübermittlungsnetzwerks angeordnet ist, wobei der Dienstserver einen Speicher und einen Prozessor beinhaltet, wobei der Speicher Computerprogramme und mehrere an Domänennamen gebundene Berechtigungsnachweise speichert, und wenn von dem Prozessor ausgeführt, die Computerprogramme die folgenden Schritte implementieren:
Empfangen (S11) einer Handshake-Anforderung, die von einem Client an einen Zieldomänennamen gesendet wurde;
Rückkoppeln (S13) eines an den Zieldomänennamen gebundenen Zielberechtigungsnachweises an den Client, wobei der Zielberechtigungsnachweis einen bestimmten öffentlichen Schlüssel beinhaltet, um so dem Client zu ermöglichen, den bestimmten öffentlichen Schlüssel zu verwenden, um einen Sitzungsschlüssel einer aktuellen Sitzung zu verschlüsseln;
Empfangen (S15) eines von dem Client bereitgestellten verschlüsselten Sitzungsschlüssels, und Senden einer Entschlüsselungsanforderung an einen Beschleunigungsserver, wobei die Entschlüsselungsanforderung den Zieldomänennamen und den verschlüsselten Sitzungsschlüssel beinhaltet, um so dem Beschleunigungsserver zu ermöglichen, den verschlüsselten Sitzungsschlüssel basierend auf einem an den Zieldomänennamen gebundenen privaten Schlüssel zu entschlüsseln;
Empfangen und Speichern (S17) eines von dem Beschleunigungsserver rückgekoppelten entschlüsselten Sitzungsschlüssels, wobei dadurch ein aktueller Handshake-Vorgang abgeschlossen wird.

6. Beschleunigungsverfahren für die Handshake-Anforderung in einem Inhaltsübermittlungsnetzwerk, wobei das Verfahren auf einen Beschleunigungsserver in einem Randknoten anwendbar ist, wobei der Beschleunigungsserver an Domänennamen gebundene mehrere private Schlüssel speichert und mit Beschleunigungskomponenten eines bestimmten Protokolls installiert sind, und die Beschleunigungskomponenten an bestimmte Vorgänge in dem Beschleunigungsserver gebunden sind, wobei das Verfahren Folgendes umfasst:
Empfangen (S21) einer von einem Dienstserver gesendeten Entschlüsselungsanforderung, wobei die Entschlüsselungsanforderung einen Zieldomänennamen und einen durch einen bestimmten öffentlichen Schlüssel verschlüsselten Sitzungsschlüssel beinhaltet, wobei der bestimmte öffentliche Schlüssel in einem an den Zieldomänennamen gebundenen Zielberechtigungsnachweis beinhaltet ist, und der Zielberechtigungsnachweis auf dem Dienstserver gespeichert ist;
Erwerben (S23) eines an den Zieldomänennamen gebundenen privaten Schlüssels, und Verwenden des erworbenen privaten Schlüssels, um einen verschlüsselten Sitzungsschlüssels durch den bestimmten Vorgang zu entschlüsseln, und
Rückkoppeln (S25) eines entschlüsselten Sitzungsschlüssels an den Dienstserver, wobei der entschlüsselte Sitzungsschlüssel konfiguriert ist, um Kommunikationsdaten zu verschlüsseln, die zwischen dem Dienstserver und einem Client übertragen werden.

7. Verfahren nach Anspruch 6, wobei private Schlüssel in dem Beschleunigungsserver unter einem bestimmten Pfad gespeichert sind, und dementsprechend, das Erwerben eines an den Zieldomänennamen gebundenen privaten Schlüssels, Folgendes umfasst:
Bestimmen eines von dem Ziel bestimmten Pfads, zu dem der Zieldomänenname führt, und Lesen eines privaten Schlüssels, der unter dem Ziel bestimmten Pfad gespeichert ist.

8. Verfahren nach Anspruch 6, wobei der Beschleunigungsserver mit einem einem Domänennamen zugehörigen Abhöranschluss konfiguriert ist, und dementsprechend, das Empfangen der von dem Dienstserver gesendeten Entschlüsselungsanforderung Folgendes umfasst:
Identifizieren eines Zieldomänennamens in der von dem Dienstserver gesendeten Entschlüsselungsanforderung, und Empfangen der Entschlüsselungsanforderung durch einen dem Zieldomänennamen zugehörigen Zielabhöranschluss.

9. Verfahren nach Anspruch 6, wobei der Randknoten einen Slaveknoten beinhaltet, und dementsprechend, das Verfahren ferner Folgendes umfasst:
Erfassen der aktuellen Leistungsindizes des Beschleunigungsservers, und wenn ein Leistungsindex einen ermöglichten Bereich überschreitet, Umschalten des Dienstes in dem Randknoten zu dem Slaveknoten und Aussenden einer Benachrichtigungsmeldung, die konfiguriert ist, um das Umschalten des Knotens anzugeben.

10. Beschleunigungsserver, wobei der Beschleunigungsserver in einem Randknoten eines Inhaltsübermittlungsnetzwerks angeordnet ist, wobei der Beschleunigungsserver einen Speicher und einen Prozessor beinhaltet und mit Beschleunigungskomponenten eines an bestimmte Vorgänge gebundenen bestimmten Protokolls installiert ist, wobei der Speicher Computerprogramme speichert und mehrere an Domänennamen gebundenen private Schlüssel speichert, und wenn von dem Prozessor ausgeführt, die Computerprogramme die folgenden Schritte implementieren:
Empfangen (S21) einer von einem Dienstserver gesendeten Entschlüsselungsanforderung, wobei die Entschlüsselungsanforderung einen Zieldomänennamen und einen durch einen bestimmten öffentlichen Schlüssel verschlüsselten Sitzungsschlüssel beinhaltet, wobei der bestimmte öffentliche Schlüssel in einem an den Zieldomänennamen gebundenen Zielberechtigungsnachweis beinhaltet ist, und der Zielberechtigungsnachweis auf dem Dienstserver gespeichert ist;
Erwerben (S23) eines an den Zieldomänennamen gebundenen privaten Schlüssels, und Verwenden eines erworbenen privaten Schlüssels, um einen verschlüsselten Sitzungsschlüssels durch die bestimmten Vorgänge zu entschlüsseln, und
Rückkoppeln (S25) eines entschlüsselten Sitzungsschlüssels an den Dienstserver, wobei der entschlüsselte Sitzungsschlüssel konfiguriert ist, um Kommunikationsdaten zu verschlüsseln, die zwischen dem Dienstserver und einem Client übertragen werden.

11. Randknoten in einem Inhaltsübermittlungsnetzwerk, wobei der Randknoten einen Dienstserver und einen Beschleunigungsserver umfasst, wobei:
der Dienstserver konfiguriert ist, um ein Beschleunigungsverfahren nach einem der Ansprüche 1 bis 4 auszuführen; und
der Beschleunigungsserver konfiguriert ist, um ein Beschleunigungsverfahren nach einem der Ansprüche 6 bis 9 auszuführen.

## Revendications

1. Procédé d'accélération pour une demande d'établissement de liaison dans un réseau de distribution de contenu, applicable à un serveur de service dans un nœud de périphérie, le serveur de service stockant une pluralité de justificatifs d'identité liés à des noms de domaine, le procédé comprenant :
la réception (S11) d'une demande d'établissement de liaison envoyée par un client vers un nom de domaine cible ;
le renvoi (S13) d'une information d'identification cible liée au nom de domaine cible au client, dans lequel le justificatif d'identité cible comporte une clé publique spécifiée de façon à permettre au client d'utiliser la clé publique spécifiée pour chiffrer une clé de session d'une session en cours ;
la réception (S15) d'une clé de session chiffrée fournie par le client, et l'envoi d'une demande de déchiffrement à un serveur d'accélération, la demande de déchiffrement comportant le nom de domaine cible et la clé de session chiffrée de façon à permettre au serveur d'accélération de déchiffrer la clé de session chiffrée sur la base d'une clé privée liée au nom de domaine cible ; et
la réception et le stockage(S17) d'une clé de session déchiffrée renvoyée par le serveur d'accélération, complétant ainsi un processus d'établissement de liaison en cours.

2. Procédé selon la revendication 1, dans lequel un certain nombre de serveurs de services dans le nœud de périphérie est au moins deux, et en conséquence, la réception d'une demande d'établissement de liaison envoyée par un client vers un nom de domaine cible comprend :
l'acquisition de paramètres de chargement de chaque serveur de service à partir du nœud de périphérie, et sur la base des paramètres de chargement acquis, la détermination d'un serveur de service avec une charge minimale à partir des au moins deux serveurs de service en tant que serveur de service cible ; et
par le biais du serveur de service cible, la réception de la demande d'établissement de liaison envoyée par le client vers le nom de domaine cible.

3. Procédé selon la revendication 1, dans lequel lors de l'envoi de la demande de déchiffrage au serveur d'accélération, le procédé comprend en outre :
la détermination d'une suite d'algorithmes utilisée dans la session en cours avec le client.

4. Procédé selon la revendication 1, dans lequel après la réception de la demande d'établissement de liaison envoyée par le client vers le nom de domaine cible, le serveur de service maintient une connexion persistante avec le client par le biais d'un premier processus, et le serveur de service maintient une connexion persistante avec le serveur d'accélération par le biais d'un second processus, et en conséquence, le procédé comprend en outre :
l'établissement d'une relation de mappage entre le premier processus et le second processus, de telle sorte que lorsque le client envoie à nouveau une demande d'accès vers le nom de domaine cible à l'intérieur d'un délai spécifié, la demande d'accès est reçue par le serveur de service par le biais du premier processus, et la demande d'accès est traitée entre le serveur de service et le serveur d'accélération par le biais du second processus.

5. Serveur de service, le serveur de service étant disposé dans un nœud de périphérie d'un réseau de distribution de contenu, le serveur de service comporte une mémoire et un processeur, la mémoire stockant des programmes informatiques et une pluralité de justificatifs d'identité liés aux noms de domaine, et lorsqu'ils sont exécutés par le processeur, les programmes informatiques mettent en œuvre les étapes suivantes :
la réception (S11) d'une demande d'établissement de liaison envoyée par un client vers un nom de domaine cible ;
le renvoi (S13) d'une information d'identification cible liée au nom de domaine cible au client, dans lequel le justificatif d'identité cible comporte une clé publique spécifiée de façon à permettre au client d'utiliser la clé publique spécifiée pour chiffrer une clé de session d'une session en cours ;
la réception (S15) d'une clé de session chiffrée fournie par le client, et l'envoi d'une demande de déchiffrement à un serveur d'accélération, la demande de déchiffrement comportant le nom de domaine cible et la clé de session chiffrée de façon à permettre au serveur d'accélération de déchiffrer la clé de session chiffrée sur la base d'une clé privée liée au nom de domaine cible ;
la réception et le stockage(S17) d'une clé de session déchiffrée renvoyée par le serveur d'accélération, complétant ainsi un processus d'établissement de liaison en cours.

6. Procédé d'accélération pour la demande d'établissement de liaison dans un réseau de distribution de contenu, le procédé étant applicable à un serveur d'accélération dans un nœud de périphérie, le serveur d'accélération stockant une pluralité de clés privées liées à des noms de domaine et installées avec des composants d'accélération d'un protocole spécifié et les composants d'accélération sont liés à des processus spécifiés dans le serveur d'accélération, le procédé comprenant :
la réception (S21) d'une demande de déchiffrement envoyée par un serveur de service, dans lequel la demande de déchiffrement comporte un nom de domaine cible et une clé de session chiffrée par une clé publique spécifiée, la clé publique spécifiée est comprise dans un justificatif d'identité cible lié au nom de domaine cible, et les informations d'identification cibles sont stockées dans le serveur de service ;
l'acquisition (S23) d'une clé privée liée au nom de domaine cible, et l'utilisation de la clé privée acquise pour déchiffrer une clé de session chiffrée par le biais des processus spécifiés et le renvoi (S25) d'une clé de session déchiffrée au serveur de service, la clé de session déchiffrée étant configurée pour chiffrer les données de communication transmises entre le serveur de service et un client.

7. Procédé selon la revendication 6, dans lequel les clés privées dans le serveur d'accélération sont stockées sous un chemin spécifié, et en conséquence, l'acquisition d'une clé privée liée au nom de domaine cible comprend :
la détermination d'un chemin spécifié cible vers lequel le nom de domaine cible dirige, et la lecture d'une clé privée stockée sous le chemin spécifié cible.

8. Procédé selon la revendication 6, dans lequel le serveur d'accélération est configuré avec un port d'écoute associé à un nom de domaine, et en conséquence, la réception de la demande de déchiffrage envoyée par le serveur de service comprend :
l'identification d'un nom de domaine cible dans la demande de déchiffrement envoyée par le serveur de service, et la réception de la demande de déchiffrement par le biais d'un port d'écoute cible associé au nom de domaine cible.

9. Procédé selon la revendication 6, dans lequel le nœud de périphérie comporte un nœud esclave, et en conséquence, le procédé comprend en outre :
la détection des indices de performance en cours du serveur d'accélération et lorsqu'un indice de performance dépasse une plage autorisée, la commutation de service dans le nœud de périphérie au nœud esclave et l'envoi d'un message de notification configuré pour indiquer la commutation de nœuds.

10. Serveur d'accélération, le serveur d'accélération étant disposé dans un nœud de périphérie d'un réseau de distribution de contenu, le serveur d'accélération comportant une mémoire et un processeur et étant installé avec des composants d'accélération d'un protocole spécifié liés à des processus spécifiés, la mémoire stockant des programmes informatiques et une pluralité de clés privées liées à des noms de domaine, et lorsqu'ils sont exécutés par le processeur, les programmes informatiques mettent en œuvre les étapes suivantes :
la réception (S21) d'une demande de déchiffrement envoyée par un serveur de service, dans lequel la demande de déchiffrement comporte un nom de domaine cible et une clé de session chiffrée par une clé publique spécifiée, la clé publique spécifiée est comprise dans un justificatif d'identité cible lié au nom de domaine cible, et les informations d'identification cibles sont stockées dans le serveur de service ;
l'acquisition (S23) d'une clé privée liée au nom de domaine cible, et l'utilisation d'une clé privée acquise pour déchiffrer une clé de session chiffrée par le biais des processus spécifiés et le renvoi (S25) d'une clé de session déchiffrée au serveur de service, la clé de session déchiffrée étant configurée pour chiffrer les données de communication transmises entre le serveur de service et un client.

11. Nœud de périphérie dans un réseau de distribution de contenu, le nœud de périphérie comprenant un serveur de service et un serveur d'accélération, dans lequel :
le serveur de service est configuré pour exécuter un procédé d'accélération selon l'une quelconque des revendications 1 à 4 ; et
le serveur d'accélération est configuré pour exécuter un procédé d'accélération selon l'une quelconque des revendications 6 à 9.
